# EUROPÄISCHE PATENTANMELDUNG

(11) **EP 0 686 376 A2**
(43) Veröffentlichungstag der Anmeldung: **13.12.1995**
(21) Anmeldenummer: 95108629.7
(22) Anmeldetag: 06.06.1995
(51) Int. Cl.: A61C 1/05

(54) **Gekühltes motorisch betriebenes Winkelstück für den zahnärztlichen Bedarf**

(30) Priorität: 06.06.1994 DE 4419660
(71) Anmelder: LEITER, Alfred, D-75175 Pforzheim (DE); Janert, Rolf, D-71546 Aspach (DE); Riesch, Hans-Curt, Dr., D-75173 Pforzheim (DE)
(72) Erfinder: Leiter, Alfred, D-75175 Pforzheim (DE)
(74) Vertreter: Twelmeier, Ulrich, Dipl.Phys.

(57) **Zusammenfassung**

Winkelstück für den zahnärztlichen Bedarf mit einem Gehäuse, welches aus einem Kopfteil (3) und einem Schaftteil (2) besteht, mit einer im Kopfteil (3) untergebrachten, drehbar angetriebenen Spannvorrichtung (6) zum Einspannen eines Bohr-, Fräs- oder Schleifwerkzeugs (7), welches von der Vorderseite des Kopfteils (3) her in die Spannvorrichtung (6) einzuführen ist und zum Zwecke der Innenkühlung eine längs durchgehende Bohrung (8) hat,
mit einer im Schaftteil (2) und Kopfteil (3) verlaufenden ersten Zuleitung (16) für ein Kühlfluid, die in die Bohrung (8) des Werkzeugs (7) mündet,
und mit mindestens einer weiteren Zuleitung (27) für das Kühlfluid, welche im Kopfteil (3) eine ins Freie mündende, gegen das Werkzeug (7) gerichtete Mündung hat.

Die weitere Zuleitung (27) zweigt im Kopfteil (3) von der ersten Zuleitung (16) ab.

## Beschreibung

Die Erfindung geht aus von einem Winkelstück mit den im Oberbegriff des Anspruchs 1 angegebenen Merkmalen. Solche Winkelstücke benötigt der Zahnarzt für Bohr-, Schleif- und Fräsarbeiten an Zähnen und Kieferknochen. Das Winkelstück enthält Getriebeelemente für den Drehantrieb einer Spannvorrichtung, welche im Kopfteil des Winkelstücks angeordnet ist und zum Einspannen des Werkzeugs dient. Es ist bekannt, die Spannvorrichtung als Spannzange auszubilden, in welcher das Werkzeug durch Federkraft festgelegt wird. Es ist ferner bekannt, die Spannzange durch einen an der Rückseite des Kopfteils vorgesehenen Druckknopf zu betätigen; dazu ist zwischen dem Druckknopf und der Spannzange eine verschiebbare Hülse vorgesehen, welche mit ihrem keilförmigen vorderen Ende in die Spannzange eingreift und sie spreizt, wenn der Druckknopf niedergedrückt wird.

Insbesondere bei kieferchirurgischen Arbeiten ist es wichtig, darauf zu achten, daß das Werkzeug nicht zu heiß wird, denn bei Temperaturen ab ungefähr 40-42°C beginnt das Knochengewebe abzusterben und Implantate wachsen nicht mehr ein. Das bekannte Winkelstück hat deshalb an der Vorderseite des Kopfteils einen ringförmigen Deckel mit einer, zwei oder drei Düsen, denen durch eine im Schaftteil des Winkelstücks verlaufende Zuleitung Wasser zugeführt wird, welches durch die Düsen von außen gegen das Werkzeug gesprüht wird.

Eine wirksamere Kühlung ermöglichen jedoch Werkzeuge, die von innen gekühlt sind und zu diesem Zweck eine längs verlaufende Bohrung haben (DE-A-34 33 570, EP-A-374 276). Innen gekühlte Werkzeuge haben gegenüber von außen gekühlten Werkzeugen darüberhinaus den Vorteil, daß sie nur wenig Wasser abschleudern, wodurch sonst Keime im Mundraum und außerhalb des Mundraumes verteilt werden können, die der Zahnarzt und sein Hilfspersonal einatmen müssen.

Ein Winkelstück mit den im Oberbegriff des Anspruchs 1 angegebenen Merkmalen ist aus der EP-A-374 276 bekannt. Es dient zur Aufnahme eines längs durchbohrten Werkzeugs, dem das Kühlwasser durch eine eine in einem Druckknopf verlaufende Zuleitung hindurch zugeführt wird.

Winkelstücke, die für innen gekühlte Werkzeuge bestimmt sind, sind auch in der Lage, herkömmliche Werkzeuge aufzunehmen, die keine Längsbohrung haben und deshalb nicht von innen gekühlt werden können, denn für das Einspannen des Werkzeugs im Kopfteil des Winkelstücks kommt es nur darauf an, daß der Werkzeugschaft einen passenden Außendurchmesser hat. Zahnärzte haben üblicherweise ein reichhaltiges Sortiment von Werkzeugen, die nicht durchbohrt sind. Setzt er solche Werkzeuge in ein Winkelstück ein, wie es in der DE-A-34 33 570 offenbart ist, dann bleibt das Werkzeug ohne Kühlung, was zu den eingangs geschilderten Nachteilen führt.

Bei dem aus der EP-0 374 276 A1 bekannten Winkelstück ist zusätzlich zur Innenkühlung des Werkstücks auch eine Außenkühlung vorgesehen. Zu diesem Zweck verlaufen im Schafteil des Winkelstücks eine Zuleitung für Kühlwasser und eine weitere Zuleitung für Kühlluft, die im Bereich des Kopfteils nach unten hin abknicken und an der Unterseite des Kopfteils ins Freie münden und schräg gegen das Werkzeug gerichtet sind. Im rückwärtigen Teil des Handstücks sind Ventile vorgesehen, um die Zuleitungen absperren zu können. Die zusätzlichen Zuleitungen im Schaftteil erfordern einen hohen Fertigungsaufwand, der das Winkelstück erheblich verteuert und dadurch die Verkaufschancen beim Zahnarzt mindert.

Der vorliegenden Erfindung liegt die Aufgabe zugrunde, ein Winkelstück zu schaffen, bei welchem auf einfachere Weise erreicht wird, daß es für die Innenkühlung und die Außenkühlung von Werkzeugen verwendbar ist.

Diese Aufgabe wird gelöst durch ein Winkelstück mit den im Anspruch 1 angegebenen Merkmalen. Vorteilhafte Weiterbildungen der Erfindung sind Gegenstand der abhängigen Ansprüche.

Dadurch, daß die weitere Zuleitung für eine Außenkühlung des Werkzeuges erst im Kopfteil des Winkelstücks von der ersten Zuleitung abzweigt, kann die Länge der weiteren Zuleitung auf ein Minimum beschränkt werden. Das hat gleichzeitig zur Folge, daß die Änderungen, die am Winkelstück vorgenommen werden müssen, um es ergänzend zur Innenkühlung auch für eine Außenkühlung verwendbar zu machen, nur minimal sind, weil sie das Winkelstück im wesentlichen unverändert lassen.

Vorzugsweise ist die weitere Zuleitung im Kopfteil durch ein Absperrventil absperrbar. Das ermöglicht es, die Außenkühlung nur wahlweise einzusetzen. Das Absperrventil kann ein sehr einfaches Ventil sein, an dessen Dichtheit nur mäßige Anforderungen zu stellen sind. Das Absperrventil kann ein Linearschieber oder ein Drehschieber sein, dessen Handhabe so anzuordnen ist, daß es möglichst wenig vorsteht und beim Arbeiten im Mund des Patienten nicht stört. Besonders vorteilhaft unter diesem Gesichtspunkt ist die Verwendung eines Drehschiebers als Absperrventil, welcher koaxial zum Werkzeug bzw. zu dessen Spannvorrichtung am Kopfteil angeordnet ist. Ein solcher Drehschieber kann als Ring in die Kontur des Kopfteils integriert werden, stört dadurch beim Arbeiten nicht und ist doch leicht handhabbar, insbesondere, wenn es sich um einen Ring handelt, welcher an der Spitze (Unterseite) des Kopfteils angebracht ist und das Kopfteil dort abschließt, so daß auch die Mündungen der weiteren Zuleitungen sich in diesem Ring befinden. Bei dieser Anordnung kann man den Drehschieber nicht nur an seiner äußeren Mantelfläche, sondern auch an seiner unteren Begrenzungskante bequem erfassen und verdrehen, so daß es um nichts über die Mantelfläche des übrigen Kopfteils vorstehen muß. Der Drehschieber kann an dieser Stelle vielmehr anstelle der sonst üblichen Spitze des Kopfteils vorgesehen sein, so daß sich die Außenkontur des Kopfteils dadurch überhaupt nicht ändert. Die Verwendung eines Drehschiebers an der unteren Spitze des Kopfteils hat darüberhinaus den Vorteil, daß die für die Außenkühlung des Werkzeuges vorgesehene Zweigleitung in diesem Fall die geringst mögliche Länge hat.

Für eine wirksame Außenkühlung ist es vorteilhaft, nicht nur eine Mündung, sondern mehrere Mündungen vorzusehen, die gegen das Werkzeug gerichtet sind. Zu diesem Zweck ist in Weiterbildung der Erfindung vorzugsweise vorgesehen, daß die für die Außenkühlung vorgesehene weitere Zuleitung für das Kühlfluid in einen Verteilkanal mündet, welcher das Kühlfluid auf mehrere gegen das Werkzeug gerichtete Leitungen verteilt. Dieser Verteilkanal kann im Drehschieber angeordnet sein, aber auch in einem angrenzenden Strukturteil des Kopfteils.

Der Drehschieber kann auf unterschiedliche Weise an der Spitze des Kopfteils befestigt sein. Er kann z.B. auf einen Zapfen aufgeschoben und darauf durch einen Sicherungsring festgehalten sein. Am günstigsten ist es, ihn auf seiner Innenseite mit einer Ringwulst zu versehen und ihn mit dieser in eine Ringnut der Mantelfläche des Zapfens, welcher ein Strukturteil des Kopfteils ist, einrasten zu lassen, wobei die Federwirkung durch einen Federspannring unterstützt werden kann. Etwaige Leckage von Kühlflüssigkeit, welche dabei nach außen hin auftreten kann, ist unbedeutend, da das Kopfteil beim Arbeiten ohnehin äußerlich naß wird.

Zum Absperren der den Innenkanal des Werkzeugs mit Kühlfluid versorgenden Leitung wird kein Absperrventil benötigt, denn wenn man ein Werkzeug ohne innenliegenden Kühlkanal verwendet, dann ist die Zuleitung ohnehin versperrt, weil das Werkzeug keinen Abfluß zuläßt. Damit das Kühlfluid dann nicht in Lager- und Getriebeelemente im Kopfteil eintritt, kann man die bei innen gekühlten Werkzeuge in das Werkzeug mündende Zuleitung in der Umgebung des Werkzeugschaftes durch Dichtringe abdichten. Solche Dichtungen sind aus der DE-A-39 30 114 bekannt. Um die Dichtung zum Inneren des Kopfteils absolut leckagefrei zu machen, ist es bekannt, oberhalb des Dichtringes, welcher die Zuleitung zum Innenraum des Kopfteils abdichtet, einen Druckluftkanal vorzusehen, in welchen über eine Luftzuleitung Druckluft eingeführt werden kann, so daß oberhalb der Dichtung ein größerer Druck herrscht als unterhalb der Dichtung. Für ein derart abgedichtetes Winkelstück kann man in vorteilhafter Weiterbildung der Erfindung vorsehen, die Luftzuleitung ebenfalls zur Spitze des Handstücks verzweigen zu lassen, um die Möglichkeit zu haben, ergänzend zur Flüssigkühlung auch eine Luftkühlung vorzusehen. Diese Luft-Zweigleitung ist zweckmäßigerweise durch denselben Drehschieber absperrbar wie die Zuleitung für das Kühlfluid. Sowohl Kühlfluid als auch Druckluft können aus mehreren Mündungen gegen das Werkzeug gerichtet austreten, wenn für beide ein Verteilkanal vorgesehen ist, der sich vorzugsweise halbringförmig um das Werkzeug herum erstreckt und entweder im Drehschieber oder im angrenzenden Strukturteil des Kopfteils liegt.

Mit dem erfindungsgemäßen Winkelstück sind unterschiedliche Arbeitsweisen möglich:
- Innengekühlte Werkzeuge können allein durch Innenkühlung gekühlt werden.
   Innengekühlte Werkzeuge können durch Öffnen der zusätzlichen Kanäle zusätzlich von außen mit Kühlfluid und ggfs. mit Luft gekühlt werden.
- Werkzeuge, die keinen innenliegenden Kanal haben, können von außen mit Kühlfluid und ggfs. mit Luft gekühlt werden.
- Werkzeuge ohne innenliegenden Kühlkanal können bedarfsweise auch ungekühlt betrieben werden.
   Eine entsprechende Leitungsführung, wie sie für das Winkelstück beschrieben ist, ist auch möglich bei zahnärztlichen Handstücken, die nicht abgewinkelt, sondern gerade verlaufen. Die Erfindung ist auf diese entsprechend übertragbar.

Ein Ausführungsbeispiel ist in den beigefügten Zeichnungen dargestellt.
- Figur 1: zeigt schematisch den vorderen Abschnitt eines Winkelstücks im Längsschnitt, in ungefähr zehnfacher Vergrößerung,
- Figur 2: zeigt als Detail, nochmals vergrößert, einen von der Unterseite her in das Kopfteil des Handstücks einzufügenden Einsatz mit Zuführleitungen für Luft und Kühlfluid, sowie mit einem Drehschieber als Absperrventil, und
- Figur 3: zeigt einen Schnitt durch die Verteilkanäle des Einsatzes.

Das Winkelstück hat ein Gehäuse 1 bestehend aus einem Schaftteil 2 und einem Kopfteil 3, welche mit ihren Getriebeachsen 4 und 5 einen rechten Winkel miteinander einschließen. Im Kopfteil 3 ist eine Spannzange 6 - nur schematisch als Hülse dargestellt - drehbar gelagert. Die Spannzange kann einen Aufbau haben, wie er z.B. in der EP-A-0 374 276, in der DE-A-34 33 570 oder in der DE-A-43 15 596 offenbart ist.

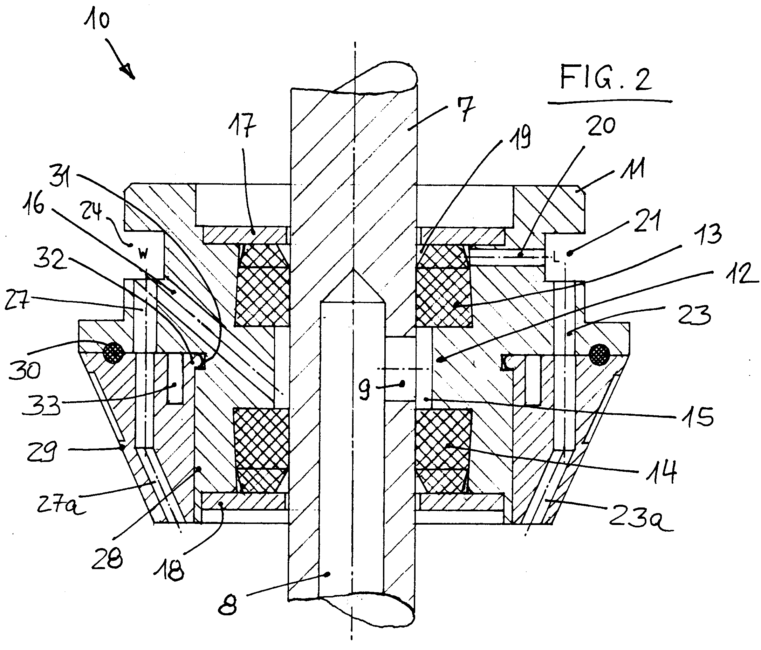

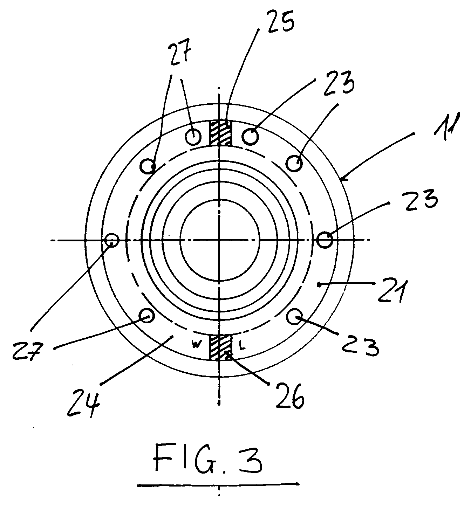

In der Spannzange steckt ein Werkzeug 7, welches von der Spitze her längs aufgebohrt ist; die Bohrung 8 endet vor dem rückwärtigen Ende des Werkzeuges und ist durch eine seitlich vorgesehene Einlaßöffnung 9 zugänglich. Wenn das Werkzeug 7 in der Spannzange 6 steckt, befindet sich die Einlaßöffnung im Bereich eines Einsatzes 10, welcher von unten her in das Kopfteil 3 eingefügt ist. Dieser Einsatz ist vergrößert in Figur 2 dargestellt. Er besteht aus einem Hauptteil 11, welches einen Durchgang für das Werkzeug 7 hat. In diesem Durchgang ist ein ringförmiger Vorsprung 12 gebildet, welcher als Anschlag für zwei Dichtringe 13 und 14 dient, welche eine flüssigkeitsdichte Durchführung für das Werkzeug 7 bilden. Zwischen den beiden Dichtringen 13 und 14 liegt ein Ringkanal 15, in welchen einerseits die Einlaßöffnung 9 und andererseits eine erste Zuleitung 16 für ein Kühlfluid, insbesondere Wasser, mündet. Durch die Zuleitung 16 herangeführtes Kühlfluid verteilt sich im Ringraum 15, tritt durch die Öffnung 9 in die Längsbohrung 8 ein und an der nicht dargestellten Werkzeugspitze wieder aus. Die Dichtringe 13 und 14 sind mit Hilfe von Spannringen 17 und 18 gegen den ringförmigen Vorsprung 12 vorgespannt. In den Raum 19 oberhalb der Dichtung 13 wird über eine Luftzuleitung 20 Druckluft eingeführt, so daß im Raum 19 ein höherer Druck herrscht als im Ringkanal 15, wodurch eine Leckage des Kühlfluids nach oben hin in den Kopfteil 3 des Winkelstücks vermieden wird. Die Luftzuleitung 20 setzt sich fort bis in den Schaffte 2 des Winkelstücks und verteilt sich über einen Verteilkanal 21, welcher im Hauptteil 11 des Einsatzes vorgesehen ist und das Werkzeug 7 halbongförmig umgibt (s. Figur 3). Vom Verteilkanal 21 wird die Luft zum einen durch einen oder mehrere Kanäle 22 durch den oberen Bereich der Dichtung 13 hindurch zum Dichtspalt zwischen der Dichtung 13 und dem Werkzeug 7 geführt und andererseits über mehrere Zweigleitungen 23 nach unten aus dem Hauptteil 11 heraus.

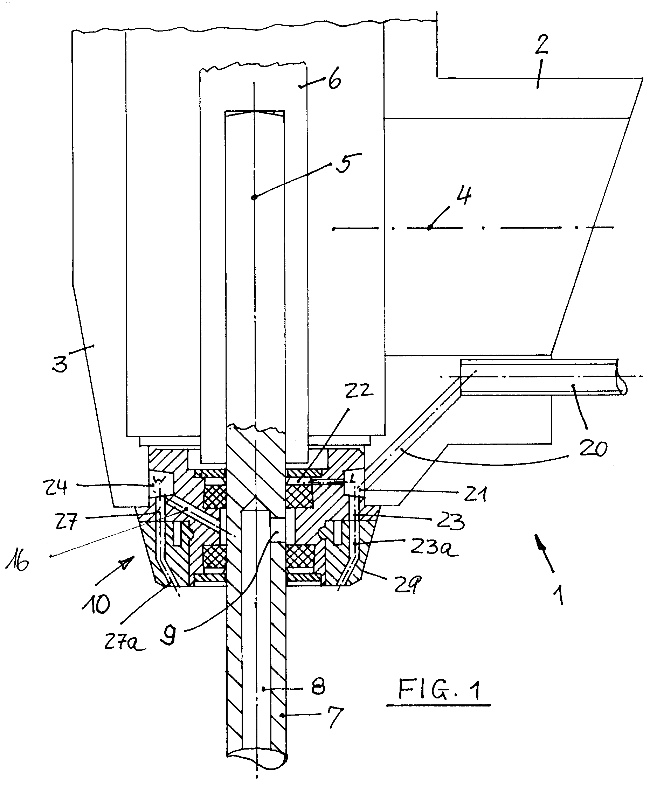

Parallel zur Luftzuleitung 20 verläuft im Schaftteil 2 des Winkelstücks eine Zuleitung für Kühlfluid, in Figur 1 durch die Luftzuleitung 20 verdeckt. Sie mündet in einen weiteren halbringförmigen Verteilkanal 24 welcher wie der Verteilkanal 21 das Werkzeug 7 halbringförmig umgibt; die beiden halbringförmigen Kanäle 21 und 24 ergänzen sich, wie Figur 3 zeigt, zu einem Ring, der durch zwei Zwischenwände 25 und 26 unterteilt ist welche die Luft vom Kühlfluid (Wasser) trennen. Vom Verteilkanal 24 führt nicht nur die Zuleitung 16 zum Ringkanal 9, sondern weitere Zuleitungen 27 nach unten aus dem Hauptteil 11 heraus.

Das Hauptteil 11 des Einsatzes hat einen zapfenförmigen Fortsatz 28, auf welchen ein drehbarer Ring 29 aufgesteckt ist, welcher als Drehschieberventil dient. Zwischen diesem Ring 29 und dem Hauptteil befindet sich eine O-Ringdichtung 30. Der Ring 29 ist auf den zapfenförmigen Fortsatz 28 aufgerastet, welcher zu diesem Zweck eine Ringnut 31 hat, in welche das Drehschieberventil 29 mit einer Ringwulst 32 eingreift. Damit die Ringwulst 32 zurückfedern kann, ist der Ring 29 an dieser Stelle von der Rückseite her ringförmig eingeschnitten. In dem so gebildeten Einschnitt 33 kann nach Bedarf ein hier nicht dargestellter Federspannring liegen, der die Ringwulst 32 in die Ringnut 31 drückt.

In dem Ring 29 befinden sich Zuleitungen 27a für Kühlfluid und 23a für Druckluft, welche an der Unterseite des Rings 29 schräg gegen das Werkzeug 7 gerichtete Mündungen haben und in einer Teilung angeordnet sind, die der Anordnung der entsprechenden Zuleitungen 23 und 27 im Hauptteil 11 entspricht. Durch Verdrehen des Rings 29 können die Zuleitungen 23a und 27a mit den Zuleitungen 23 und 27 zur Deckung gebracht werden; dann können Kühlfluid und Druckluft gegen die Außenseite des Werkzeugs 7 gerichtet austreten Die Zuleitungen 23 und 27 können durch Verdrehen des Rings 29 aber auch abgesperrt werden. Der Drehwinkel des Rings kann durch Anschläge begrenzt sein.

Die Außenkontur des Einsatzes 10 stimmt überein mit der Außenkontur eines bekannten Winkelstücks; es unterscheidet sich von diesem im Aufbau des Einsatzes, insbesondere in der zweiteiligen Ausbildung mit Hauptteil 11 und ringförmigem Drehschieber 29, der die erfindungsgemäße Mehrfachausnutzung des Winkelstücks für Werkzeuge mit Innenkühlung und/oder Außenkühlung ermöglicht.

## Patentansprüche

1. Winkelstück für den zahnärztlichen Bedarf
mit einem Gehäuse (1), welches aus einem Kopfteil (3) und einem Schaftteil (2) besteht,
mit einer im Kopfteil (3) untergebrachten, drehbar angetriebenen Spannvorrichtung (6) zum Einspannen eines Bohr-, Fräs oder Schleifwerkzeuges (7), welches von der Vorderseite des Kopfteils (3) her in die Spannvorrichtung (6) einzuführen ist und zum Zwecke der Innenkühlung eine längs durchgehende Bohrung (8) hat,
mit einer im Schaftteil (2) und Kopfteil (3) verlaufenden ersten Zuleitung (16) für ein Kühlfluid, die in die Bohrung (8) des Werkzeugs (7) mündet,
und mit mindestens einer weiteren Zuleitung (27) für das Kühlfluid, welche im Kopfteil (3) eine ins Freie mündende, gegen das Werkzeug (7) gerichtete Mündung hat,
**dadurch gekennzeichnet**, daß die weitere Zuleitung (27) im Kopfteil (3) von der ersten Zuleitung (16) abzweigt.

2. Winkelstück nach Anspruch 1, **dadurch gekennzeichnet**, daß im Kopfteil (13) ein Absperrventil (29) vorgesehen ist, durch das die weitere Zuleitung (27) absperrbar ist.

3. Winkelstück nach Anspruch 2, **dadurch gekennzeichnet**, daß das Absperrventil (29) ein Drehschieber ist, welcher koaxial zum Werkzeug (7) bzw. zu dessen Spannvorrichtung (6) am Kopfteil (3) angeordnet ist

4. Winkelstück nach Anspruch 3, **dadurch gekennzeichnet**, daß der Drehschieber (29) ein an der Spitze des Kopfteils (3) angebrachter Ring ist, in welchem sich eine oder mehrere Mündungen der weiteren Zuleitung(en) (27) befinden.

5. Winkelstück nach Anspruch 4, **dadurch gekennzeichnet**, daß der Drehschieber auf die Spitze des Kopfteils (3) aufgerastet ist.

6. Winkelstück nach Anspruch 5, **dadurch gekennzeichnet**, daß an der Spitze des Kopfteils (3) eine zylindrische oder schwach konische Mantelfläche mit einer Umfangsnut (31) vorgesehen ist, in welche der Drehschieber (29) mit einer nach innen vorspringenden Ringwulst (32), insbesondere unterstützt durch einen Federspannring (in 33), federnd einrastet.

7. Winkelstück nach einem der Ansprüche 3 bis 6, **dadurch gekennzeichnet**, daß die Zuleitung (16) oder die weitere Zuleitung in einen Verteilkanal (24) münden, welcher das Kühlfluid auf mehrere Leitungen (27) verteilt.

8. Winkelstück nach einem der vorstehenden Ansprüche, **dadurch gekennzeichnet**, daß getrennt von den Zuleitungen (16,27) für das Kühlfluid eine Luftzuleitung (20) vorgesehen ist, welche in eine das Werkzeug (7) umgebende Luftkammer (19) mündet, welche nach unten durch einen im Kopfteil (3) eingesetzten , auf den Werkzeugschaft einwirkenden Dichtring (13) abgeschlossen ist,
und daß von dieser Luftzuleitung (20) eine Zweigleitung (23) abzweigt, welche durch ein Absperrventil (29) absperrbar ist und im Kopfteil (3) eine gegen das Werkzeug ( 7 ) gerichtete Mündung hat.

9. Winkelstück nach Anspruch 8, **dadurch gekennzeichnet**, daß für die Zuleitung(en) (27) für das Kühlfluid und für die Zweigleitung (23) für Luft ein gemeinsames Absperrventil (29) vorgesehen ist.

10. Winkelstück nach Anspruch 7 und 9, **dadurch gekennzeichnet**, daß in der Spitze des Kopfteils (3) ein Verteilkanal (24) für das Kühlfluid und ein Verteilkanal (21) für die Luft vorgesehen ist.

11. Winkelstück nach Anspruch 10,**dadurch gekennzeichnet**, daß die beiden Verteilkanäle (21, 24) halbringförmig ausgebildet sind und das Werkzeug koaxial umgeben.

12. Übertragung der Leitungsführung für Kühlfluid und gegebenenfalls für Luft nach einem der vorstehenden Ansprüche auf gerade Handstücke für den zahnärztlichen Bedarf.
